(19)

**Europäisches Patentamt**
**European Patent Office**
**Office européen des brevets**

(11)  **EP 4 012 284 B1**

(12)  **EUROPEAN PATENT SPECIFICATION**

(45) Date of publication and mention
of the grant of the patent:
**13.11.2024   Bulletin 2024/46**

(21) Application number: **21208659.9**

(22) Date of filing: **17.11.2021**

(51) International Patent Classification (IPC):
*F24F 11/30* (2018.01)       *F24F 11/62* (2018.01)
*G06F 30/20* (2020.01)       *F24F 13/24* (2006.01)

(52) Cooperative Patent Classification (CPC):
**F24F 11/62; F24F 11/30; F24F 13/24; G06F 30/13;**
**G06F 30/18; G06F 30/20;** G06F 2111/20;
G06F 2119/08

(54) **METHOD AND COMPUTER PROGRAM PRODUCT FOR SELECTING SUPPLY AIR DEVICES**

VERFAHREN UND COMPUTERPROGRAMMPRODUKT ZUR AUSWAHL VON
LUFTZUFUHRVORRICHTUNGEN

PROCÉDÉ ET PRODUIT DE PROGRAMME INFORMATIQUE POUR SÉLECTIONNER DES
DISPOSITIFS D'ALIMENTATION EN AIR

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority:  **08.12.2020   FI 20206267**

(43) Date of publication of application:
**15.06.2022   Bulletin 2022/24**

(73) Proprietor: **Climecon OY**
**00880 Helsinki (FI)**

(72) Inventor: **HUUSKONEN, Esa**
**02630 Espoo (FI)**

(74) Representative: **Berggren Oy**
**P.O. Box 16**
**Eteläinen Rautatiekatu 10A**
**00101 Helsinki (FI)**

(56) References cited:
**EP-A1- 2 735 808        EP-A2- 2 605 162**
**WO-A1-2020/012737      US-A1- 2003 074 164**
**US-A1- 2014 121 842     US-A1- 2018 217 621**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## Technical Field

A method for selecting supply air device to a ventilation system of a space from a group of supply air devices, which space has a measurable volume, said method comprising steps of defining total air flow rate of the space, defining acceptable noise level of the space, selecting a first subgroup of possible supply air devices based on the air flow capacities of the supply air devices and acceptable noise level of the space, determining the number of supply air devices needed in the space and calculating design air flow for the supply air device, when using determined number of supply air devices. The invention further relates to a computer program product, which is configured to perform the steps of the method according to the invention, when the program is executed in a processor of a computer.

## Background Art

A typical ventilation system of a space includes a set of supply air valves and diffusers and a set of exhaust air valves, commonly referred as ventilation devices. The ventilation system of the space is designed such that the group of ventilation devices of the space can supply the calculated supply air into the space and extract corresponding amount of exhaust air from the space. The chosen ventilation devices must also fulfil some qualitative requirements, for example the produced noise level of the devices must be acceptable, the temperature changes in the space caused by the ventilation system must be low enough and the air flow from the supply air device must be comfortable both in low-temperature air and in high temperature air. Usability-related functional features such as adjustability and versatility are also considered, when selection is made between ventilation devices fulfilling aforementioned requirements.

The technical properties, i.e. the maximum air flow, is provided by the manufacturer or seller of the ventilation device. The air thrown pattern and the estimated total noise level produced by the ventilation devices can be calculated and visualized by using sophisticated ventilation design and modelling software. However, these software products do not take into account all usability related features of the ventilation devices, whereby the suitability and overall superiority of the ventilation devices is usually not properly evaluated.

Document US 20140121842 A1 discloses a HVAC air terminal device selection method including steps of inputting at least one parameter into an auto-selection system, communicating the at least one parameter to a selection optimization processor and selecting at least one air terminal device in dependence upon the at least one parameter.

An object of the invention is to provide a method and computer program product for selecting ventilation devices to a ventilation system of a space, by which method and computer program product drawbacks related to the prior art can be reduced.

The object of the invention is achieved with a method and computer program product which are characterized in what is disclosed in the independent patent claims. Some preferred embodiments of the invention are disclosed in the dependent claims.

## Brief summary of the invention

The method according to the invention for selecting supply air device to a ventilation system of a space from a group of supply air devices, which space has a measurable volume, comprises steps of

- defining total air flow rate of the space,
- defining acceptable noise level of the space,
- selecting a first subgroup of possible supply air devices based on the air flow capacities of the supply air devices and acceptable noise level of the space,
- determining the number of supply air devices needed in the space and
- calculating design air flow for the supply air device, when using determined number of supply air devices.

The method further comprises steps of

- defining at least one additional rating property for the supply air devices,
- evaluating the performance of each supply air device of the first subgroup according to each rating property and scoring the performance,
- calculating combined rating value for each supply air device of the first subgroup by summing up performance scores of individual rating properties,
- ranking the supply air devices of the first subgroup based on the combined rating value and
- selecting supply air device to the space based on said ranking.

In a first preferred embodiment of the method according to the invention said rating properties include at least division ratio DIR and the method further comprises steps of

- defining an acceptable division ratio range for the supply air device,
- calculating the spreading area $A_S$ of the supply air device using calculated design air flow,
- calculating the real division ratio DIR for each supply air device in the first subgroup by equation

    DIR = $A_S/A_R$, in which
    $A_S$ = spreading area of the supply air device
    $A_R$ = floor area of the space served by one supply air device

- comparing the real division ratio DIR and the acceptable division ratio and
- scoring the division ratio performance of the supply air device based on the comparison between the real division ratio DIR and the acceptable division ratio range.

In a second preferred embodiment of the method according to the invention when calculating the spreading area $A_S$ of the supply air device a lowered temperature for the supply air flow is used, which lowered temperature is 2 to 5 degrees, preferably three degrees lower than the temperature of the air in the space.

In a third preferred embodiment of the method according to the invention said rating properties further include supply air flow temperature at the occupied zone of the space and the method further comprises steps of

- defining the air temperature of the space,
- calculating the temperature of the supply air flow at the occupied zone,
- calculating the difference between the calculated supply air flow temperature at the occupied zone and the air temperature of the space and
- scoring the supply air flow temperature performance of the supply air device based on the difference between the calculated supply airflow temperature at the occupied zone and the air temperature of the space.

In yet another preferred embodiment of the method according to the invention said rating properties further include flexibility of the supply air device, and the method further comprises steps of

- defining at least one measurable variable relating to the air flow through the supply air device,
- determining an ideal value for said measurable variable,
- determining the real value of said measurable variable using calculated design air flow,
- comparing the determined real value and the ideal value and
- scoring the flexibility performance of the supply air device based on the difference between the ideal value and the real value of the measurable variable. The ideal value for the measurable variable may be an average of the upper and lower limit values of the variable. Preferably, said measurable variables comprise at least one of the following:
- the air flow through the supply air device,
- pressure loss over the supply air device,
- noise level of the supply air device,
- air flow throw length of the supply air device.

In yet another preferred embodiment of the method according to the invention said rating properties further include adjustability AD of the supply air device and the method further comprises steps of

- calculation adjustability AD by equation

$$AD = AF_{total}/AF_{ADstep} * 100\%,$$

in which

   $AF_{total}$ = total air flow capacity of the supply air device
   $AF_{ADstep}$ = air flow change of a single adjusting step of the supply air device

- scoring the adjustability performance of the supply air device based on the calculated adjustability AD. Preferably, the total air flow capacity of the supply air device is calculated by equation

$$AF_{total} = k \sqrt{\Delta P_m} \quad ,$$

in which

k = calibrated air flow ratio
$\Delta P_m$ = pressure difference of over the supply air device

Factor k is characteristic value of the supply air device, which is determined in advance by the manufactures of the device.

In yet another preferred embodiment of the method according to the invention said rating properties further include versatility of the supply air device and the method further comprises steps of

- evaluating, calculating or reading the number of possible different throw patterns of the supply air device and
- scoring the versatility performance of the supply air device based on the number of possible different throw patterns. The number of possible different throw patterns is usually included in the technical data of the supply air device provided by the manufacturer of the device.

In yet another preferred embodiment of the method according to the invention the method further comprises steps of

- furnishing the selected supply air device with labels comprising data identifying the installation position of the supply air device inside the space,
- furnishing the selected supply air device with installation instructions and/or
- preadjusting the selected supply air device.

The computer program product according to the invention for selecting supply air devices to a ventilation system of a space from a group of supply air devices, which space has a measurable volume, comprises

- code means configured to define total air flow rate of the space,
- code means configured to define acceptable noise level of the space,
- code means configured to select a first subgroup of possible supply air devices based on the air flow capacities of the supply air devices and acceptable noise level of the space,
- code means configured to determine the number of supply air devices needed in the space and
- code means configured to calculate design air flow for the supply air device, when using determined number of supply air devices, when said computer program is executed in a processor of a computer.

The computer program further comprises

- code means configured to define at least one additional rating property for the supply air devices,
- code means configured to evaluate the performance of each supply air device of the first subgroup according to each rating property and score the performance,
- code means configured to calculate combined rating value for each supply air device of the first subgroup by summing up performance scores of individual rating properties,
- code means configured to rank the supply air devices of the first subgroup based on the combined rating value and
- code means configured to select the supply air device to the space based on said ranking.

In a first preferred embodiment of the computer program product according to the invention said rating properties include at least division ratio DIR and said computer program further comprises

- code means configured to define an acceptable division ratio range for the supply air device,
- code means configured to calculate the spreading area $A_s$ of the supply air device using calculated design air flow,
- code means configured to calculate the real division ratio DIR for each supply air device in the first subgroup by equation

$$DIR = A_S/A_R$$

, in which

As = spreading area of the supply air device

$A_R$ = floor area of the space served by one supply air device

- code means configured to compare the real division ratio DIR and the acceptable division ratio and
- code means configured to score the division ratio performance of the supply air device based on the comparison between the real division ratio DIR and the acceptable division ratio range.

A second preferred embodiment of the computer program product according to the invention further comprises

- code means configured to use a lowered temperature for the supply air flow, which lowered temperature is 2 to 5 degrees, preferably three degrees lower than the temperature of the air in the space, when calculating the spreading area $A_s$ of the supply air device.

In a third preferred embodiment of the computer program product according to the invention said rating properties further include supply air flow temperature at the occupied zone of the space and said computer program further comprises

- code means configured to read the air temperature of the space,
- code means configured to calculate the temperature of the supply air flow at the occupied zone,
- code means configured to calculate the difference between the calculated supply air flow temperature at the occupied zone and the air temperature of the space and
- code means configured to score the supply air flow temperature performance of the supply air device based on the difference between the calculated supply air flow temperature at the occupied zone and the air temperature of the space.

In yet another preferred embodiment of the computer program product according to the invention said rating properties further include flexibility of the supply air device, and said computer program further comprises

- code means configured to define at least one measurable variable relating to the air flow through the supply air device,
- code means configured to determine an ideal value for said measurable variable,
- code means configured to determine a real value of said measurable variable using calculated design air flow,
- code means configured to compare the determined real value and the ideal value and
- code means configured to score the flexibility performance of the supply air device based on the difference between the ideal value and the real value of the measurable variable. Preferably, the measurable variables comprise at least one of the following:
- the air flow through the supply air device,
- pressure loss over the supply air device,
- noise level of the supply air device,
- air flow throw length of the supply air device.

In yet another preferred embodiment of the computer program product according to the invention said rating properties further include adjustability AD of the supply air device and said computer program further comprises

- code means configured to calculate adjustability AD by equations

$$AD = AF_{ADstep}/AF_{total} * 100\%,$$

in which

$AF_{total}$ = total air flow capacity of the supply air device

$AF_{ADstep}$ = air flow change of a single adjusting step of the supply air and

$$AF_{total} = k \sqrt{\Delta P_m} \qquad ,$$

in which

k = calibrated air flow ratio

$\Delta P_m$ = pressure difference of over the supply air device

and

- code means configured to score the adjustability performance of the supply air device based on the calculated adjustability AD.

In yet another preferred embodiment of the computer program product according to the invention said rating properties further include versatility of the supply air device and said computer program further comprises

- code means configured to evaluate, calculate or read the number of possible different throw patterns of the supply air device and
- code means configured to score the versatility performance of the supply air device based on the number of possible different throw patterns.

An advantage of the invention is, that it provides a reliable method and tool for evaluating the overall superiority of supply air devices and suitability of the devices to a given space.
A further advantage of the invention is, that it makes ventilation system designing work easier and faster.

**Brief Description of Drawings**

In the following the invention will be described in detail, by way of examples, with reference to the accompanying drawings in which,

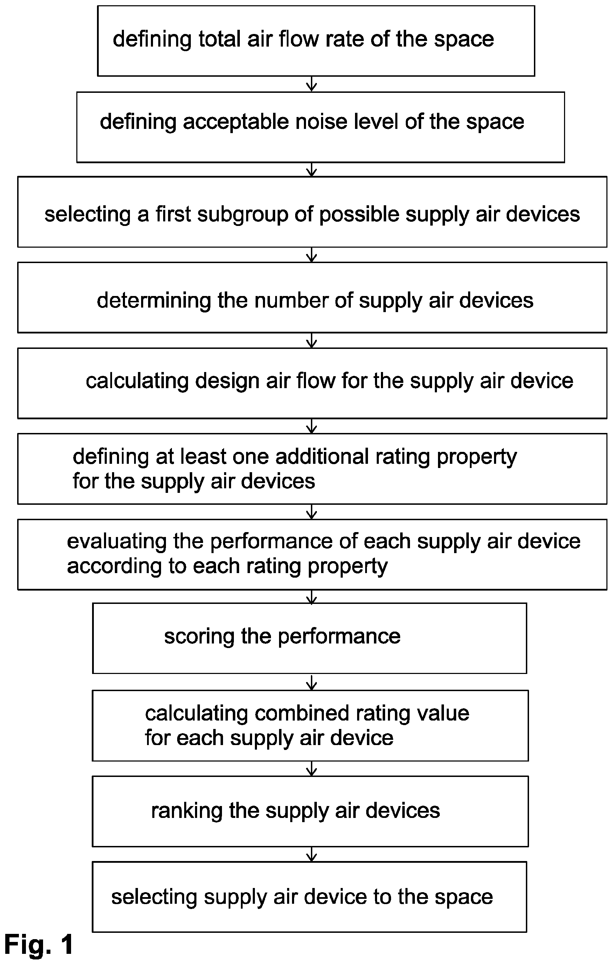

Fig. 1    depicts an example of a method according to the invention as a flow chart.

**Detailed Description**

In figure 1 an example of a method according to the invention is depicted. In the method a least one supply air device is selected to a ventilation system of a space from a group of supply air devices. The space may be a house, an apartment, an office, a premise, a public building, such as a school or a library or any other space wherein people are living, working or visiting. The group of supply air devices, from which the supply air devices are selected, may be a product collection of a single manufacturer, seller or importer of ventilation devices or a product collection of a plurality of manufactures, sellers or importers for example.
In the method the total air flow rate of the space and acceptable noise level of the space are first defined. Building regulations define minimum values for air exchange rates for different kind of premises. As a general rule air exchange rate in living conditions must be at least 0,5 1/h. In conditions, where the quality of the indoor air has higher standards, the minimum value of the air exchange rate can be higher. The total air flow rate can be calculated, when the volume of the space and the air exchange rate is known.
Acceptable noise level of the space can be taken from the building regulations or it can be chosen by the designer of the ventilation system. The calculation of the estimated noise level in a noise evaluation point can be done by known calculation methods, when the distance between the noise evaluation point and the ventilation device is known. The equations used in the calculations can be found for example from a textbook "Ilmastointilaitoksen mitoitus: Ilmastointitekniikka: osa 2; Esa Sandberg, 2014".
When the total air flow rate and acceptable noise level of the space are determined a first subgroup of possible supply air devices is selected. The selection is made based on the air flow capacities of the supply air devices and noise level produced by the supply air devices. The number of supply air devices needed in the space is determined and the design air flow for the supply air device, when using determined number of supply air devices, is calculated.
The above explained preliminary selection of a first subgroup of supply air devices can be made by a skilled ventilation system designer using his common general knowledge. The guidelines and equation needed in the preliminary design are expressed in numerous textbooks, for example in a textbook "Ilmastointilaitoksen mitoitus: Ilmastointitekniikka: osa 2; Esa Sandberg, 2014".
In the method according to the invention at least one additional rating property for the supply air devices is defined and the performance of each supply air device of the first subgroup according to each rating property is evaluated and the performance is scored. Preferably the additional rating property is related to the usability of the supply air device in the given space. Scoring means here, that the performance is expressed as a numeric value on a chosen scale. For example, the performance can have a number 4 on a scale from 1 to 5.
When the performance of each individual additional rating property is evaluated, a combined rating value for each supply air device of the first subgroup is calculated by summing up performance scores of individual rating properties.

The supply air devices of the first subgroup are ranked based on the combined rating value. All the supply air devices have then a numeric value representing their overall performance with respect to additional rating properties. The supply air device performing best in this comparison has the highest combined rating value. A supply air device to the space is selected from the first subgroup based on said ranking. Naturally, it is expedient to select a supply air device having a high, preferably the highest combined rating value.

The additional rating properties may include properties relating to the air current flowing through the supply air device or properties relating the use of the device. One of these additional properties used in the method is division ratio DIR. Division ratio is a known term and it has an established meaning in the ventilation design. Division ratio is calculated by equation DIR = $A_S/A_R$ . Here $A_S$ represents the spreading area of a single supply air device and $A_R$ is the floor area of the space served by said single supply air device. In the method according to the invention an acceptable division ratio range for the supply air device is defined and the spreading area $A_s$ of the supply air device is calculated. The acceptable division ratio is preferably at least 0,5. The acceptable division ratio range can be 0,5 to 0,8 for example. The spreading area naturally depends on intensity of the air flow through the supply air device. In the calculation previously determined design air flow is used.

Further in the method the real division ratio DIR for each supply air device in the first subgroup is calculated by aforementioned equation and the real division ratio DIR and the acceptable division ratio are compared. The division ratio performance of the supply air device is scored based on the comparison between the real division ratio DIR and the acceptable division ratio range. The calculated real division ratio should be within the acceptable range. If the calculated real division ratio is near the upper end of the range, high scores are given and if the calculated real division ratio is near the lower end of the range, scores are lower.

When the temperature of the air flowing through the air supply device is lower than the air temperature inside the space, the inflowing air flow tends to bend down towards the floor of the space. This bending diminishes the spreading area of the supply air device. In the method it is possible to the take the temperature difference into consideration when calculating the spreading area $A_s$ of the supply air device. A lowered temperature for the supply air flow can be used resulting smaller spreading area and smaller division ratio. The temperature difference between the incoming air and the air inside the space may be 2 to 5 degrees, preferably 3 degrees.

Another additional rating property used in the method is the supply air flow temperature at the occupied zone of the space. The occupied zone of the space is the area in which the people mainly stay, when they are inside the space. In the method the air temperature of the space is defined, the temperature of the supply air flow at the occupied zone is calculated and the difference between the calculated supply air flow temperature at the occupied zone and the air temperature of the space is calculated. The supply air temperature at the occupied zone depends partly on how the inflowing air and air inside the space mix together. This mixing ability is a device-related property. Thus, the supply air flow temperature at the occupied zone of the space the is affected also by the properties of the supply air device.

The temperature of the supply air flow at the occupied zone can be calculated using equations found in textbook "Ilmastointilaitoksen mitoitus: Ilmastointitekniikka: osa 2; Esa Sandberg, 2014". The supply air flow temperature performance of the supply air device is scored based on the difference between the calculated supply air flow temperature at the occupied zone and the air temperature of the space. Naturally the smaller the calculated temperature difference is, the higher is the scoring.

Another additional rating property used in the method is the flexibility of the supply air device. The flexibility is evaluated with a number of different measurable variables relating to the air flow through the supply air device. These variables may include air flow through the supply air device, pressure loss over the supply air device, noise level of the supply air device and/or air flow throw length of the supply air device. In the method at least one measurable variable is defined and ideal value for said measurable variable is determined. Next the real value of said measurable variable using calculated design air flow is determined and real value and the ideal value are compared. The flexibility performance of the supply air device is scored based on the difference between the ideal value and the real value of the measurable variable.

The aforementioned variables are measurable, device specific quantities, usually defined and informed by the manufacturer of the device. For example, the air flow of the supply air device may have a recommended minimum value of 10 l/s and maximum value of 30 l/s. An ideal value for this variable is then the mean value of the aforementioned range, i.e. 20 l/s, because this value provides equal adjustment potential to both directions of the ideal value. The difference between the calculated design air flow and the ideal flow indicates, how large is the adjustment margin of the device. If the difference between the calculated design air flow and the ideal flow is small, high scores are awarded. Similarly, the supply air device may have minimum pressure loss of 1 Pa and maximum pressure loss of 19 Pa. The ideal value for the pressure may be an average of these, i.e. 10 Pa. If the calculated pressure loss is near this average value, this demonstrates high flexibility and the scoring is high. Noise level and air throw pattern length are evaluated in a corresponding manner.

Another additional rating property used in the method is adjustability AD of the supply air device. Adjustability is calculated using equation

$$AD = AF_{ADstep} / AF_{total} * 100\%,$$

in which

AF$_{total}$ = total air flow capacity of the supply air device
AF$_{ADstep}$ = air flow change of a single adjusting step of the supply air device.

In the method the total air flow capacity of the supply air device is calculated using equation

$$AF_{total} = k \sqrt{\Delta P_m} \qquad ,$$

in which

k = calibrated air flow ratio
$\Delta P_m$ = pressure difference of over the supply air device

Factor k is a device specific character, which is determined in advance by the manufacturer of the device.
In many devices the air flow through the supply air device can be adjusted by closing or opening individual air flow holes, i.e. the adjustment works in a stepped manner. Adjustability value shows how coarse or how sensitive is the adjustment system of the device. The adjustability performance of the supply air device is scored based on the calculated adjustability AD. Naturally the smaller the calculated adjustability is, the higher is the scoring.
Another additional rating property used in the method is versatility of the supply air device. In the method the number of possible different throw patterns of the supply air device is evaluated. The number of possible different throw patterns is usually informed by the manufacturer of the device and this information can be read or calculated from the technical data of the device. The versatility performance of the supply air device is scored based on the number of possible different throw patterns.
The method steps of the invention are coded to a computer program, which carries out the method steps, when the program is executed in a processor of a computer. The method and the computer program with which the method is implemented helps the designer to make rational and reasoned selections, when designing a ventilation system of a space.
Preferably, the selected supply air devices are furnished with a label identifying the space, location and position of the supply air device inside the space. The label may be attached to the ventilation device itself or to the sales package of the device. The label may comprise readable text and numbers, machine readable pattern, such as barcode or OR-code or electronic information storing means, such as RFID- tags. The information carried by the tag may include purchase order information, delivery information and installing information, such as installation height of the ventilation device. The supply air device may be preadjusted by the manufacturer or supplier of the device, before the device is delivered to the installation space.
Some preferred embodiments of the method and computer program product according to the invention has been disclosed above. The invention is not limited to the solutions explained above, but the invention can be applied in different ways within the limits set by the patent claims.

## Claims

1. A method for selecting supply air device to a ventilation system of a space from a group of supply air devices, which space has a measurable volume, said method comprising steps of

- defining total air flow rate of the space,
- defining acceptable noise level of the space,
- selecting a first subgroup of possible supply air devices based on the air flow capacities of the supply air devices and acceptable noise level of the space,
- determining the number of supply air devices needed in the space and
- calculating design air flow for the supply air device, when using determined number of supply air devices,

**characterized in that** the method further comprises steps of

- defining at least two additional rating properties for the supply air devices,
- evaluating the performance of each supply air device of the first subgroup according to each rating property and scoring the performance,
- calculating combined rating value for each supply air device of the first subgroup by summing up performance scores of individual rating properties,
- ranking the supply air devices of the first subgroup based on the combined rating value and
- selecting supply air device to the space based on said ranking.

2. A method according to claim 1, **characterized in that**, said rating properties include at least division ratio DIR and the method further comprises steps of

- defining an acceptable division ratio range for the supply air device,
- calculating the spreading area $A_s$ of the supply air device using calculated design air flow,
- calculating the real division ratio DIR for each supply air device in the first subgroup by equation

$$DIR = A_S/A_R \quad ,$$

in which

As = spreading area of the supply air device
$A_R$ = floor area of the space served by one supply air device

- comparing the real division ratio DIR and the acceptable division ratio and
- scoring the division ratio performance of the supply air device based on the comparison between the real division ratio DIR and the acceptable division ratio range.

3. A method according to claim 2, **characterized in that**, when calculating the spreading area $A_s$ of the supply air device a lowered temperature for the supply air flow is used, which lowered temperature is 2 to 5 degrees, preferably three degrees lower than the temperature of the air in the space.

4. A method according to any of the claims claim 1 to 3, **characterized in that** said rating properties further include supply air flow temperature at the occupied zone of the space and the method further comprises steps of

- defining the air temperature of the space,
- calculating the temperature of the supply air flow at the occupied zone
- calculating the difference between the calculated supply air flow temperature at the occupied zone and the air temperature of the space and
- scoring the supply air flow temperature performance of the supply air device based on the difference between the calculated supply airflow temperature at the occupied zone and the air temperature of the space.

5. A method according to any of the claims claim 1 to 4, **characterized in that** said rating properties further include flexibility of the supply air device, and the method further comprises steps of

- defining at least one measurable variable relating to the air flow through the supply air device,
- determining an ideal value for said measurable variable,
- determining the real value of said measurable variable using calculated design air flow,
- comparing the determined real value and the ideal value and
- scoring the flexibility performance of the supply air device based on the difference between the ideal value and the real value of the measurable variable.

6. A method according to claim 5, **characterized in that**, said measurable variables comprise at least one of the following:

- the air flow through the supply air device
- pressure loss over the supply air device
- noise level of the supply air device
- air flow throw length of the supply air device.

7. A method according to any of the claims 1 to 6, **characterized in that**, said rating properties further include adjustability AD of the supply air device and the method further comprises steps of

   - calculation adjustability AD by equation

$$AD= AF_{ADstep} /AF_{total} * 100\%,$$

   in which

   $AF_{total}$ = total air flow capacity of the supply air device
   $AF_{ADstep}$ = air flow change of a single adjusting step of the supply air device

   - scoring the adjustability performance of the supply air device based on the calculated adjustability AD.

8. A method according to claim 7, **characterized in that**, said total air flow capacity of the supply air device is calculated by equation

$$AF_{total} = k \sqrt{\Delta P_m}$$

   in which

   k = calibrated air flow ratio
   $\Delta P_m$ = pressure difference of over the supply air device

9. A method according to any of the claims claim 1 to 8, **characterized in that** said rating properties further include versatility of the supply air device and the method further comprises steps of

   - evaluating, calculating or reading the number of possible different throw patterns of the supply air device and
   - scoring the versatility performance of the supply air device based on the number of possible different throw patterns.

10. A method according to any of the claims claim 1 to 9, **characterized in that** the method further comprises steps of

    - furnishing the selected supply air device with labels comprising data identifying the installation position of the supply air device inside the space,
    - furnishing the selected supply air device with installation instructions and/or
    - preadjusting the selected supply air device.

11. A computer program product for selecting supply air devices to a ventilation system of a space from a group of supply air devices, which space has a measurable volume, said computer program product comprising

    - code means configured to define total air flow rate of the space,
    - code means configured to define acceptable noise level of the space,
    - code means configured to select a first subgroup of possible supply air devices based on the air flow capacities of the supply air devices and acceptable noise level of the space,
    - code means configured to determine the number of supply air devices needed in the space and
    - code means configured to calculate design air flow for the supply air device, when using determined number of supply air devices, when said computer program is executed in a processor of a computer,

    **characterized in that** said computer program further comprises

    - code means configured to define at least two additional rating properties for the supply air devices,
    - code means configured to evaluate the performance of each supply air device of the first subgroup according to each rating property and score the performance,
    - code means configured to calculate combined rating value for each supply air device of the first subgroup by summing up performance scores of individual rating properties,

- code means configured to rank the supply air devices of the first subgroup based on the combined rating value and
- code means configured to select the supply air device to the space based on said ranking.

12. A computer program product according to claim 11, **characterized in that** said rating properties include at least division ratio DIR and said computer program further comprises

- code means configured to define an acceptable division ratio range for the supply air device,
- code means configured to calculate the spreading area $A_s$ of the supply air device using calculated design air flow,
- code means configured to calculate the real division ratio DIR for each supply air device in the first subgroup by equation

$$DIR = A_S/A_R \quad ,$$

in which

As = spreading area of the supply air device
$A_R$ = floor area of the space served by one supply air device

- code means configured to compare the real division ratio DIR and the acceptable division ratio and
- code means configured to score the division ratio performance of the supply air device based on the comparison between the real division ratio DIR and the acceptable division ratio range.

13. A computer program product according to claim 12, **characterized in that** it further comprises

- code means configured to use a lowered temperature for the supply air flow, which lowered temperature is 2 to 4 degrees, preferably three degrees lower than the temperature of the air in the space, when calculating the spreading area $A_s$ of the supply air device.

14. A computer program product according to any of the claims 11 to 13, **characterized in that** said rating properties further include supply air flow temperature at the occupied zone of the space and said computer program further comprises

- code means configured to read the air temperature of the space,
- code means configured to calculate the temperature of the supply air flow at the occupied zone,
- code means configured to calculate the difference between the calculated supply air flow temperature at the occupied zone and the air temperature of the space and
- code means configured to score the supply air flow temperature performance of the supply air device based on the difference between the calculated supply air flow temperature at the occupied zone and the air temperature of the space.

15. A computer program product according to any of the claims 11 to 14, **characterized in that** said rating properties further include flexibility of the supply air device, and said computer program further comprises

- code means configured to define at least one measurable variable relating to the air flow through the supply air device,
- code means configured to determine an ideal value for said measurable variable,
- code means configured to determine a real value of said measurable variable using calculated design air flow,
- code means configured to compare the determined real value and the ideal value and
- code means configured to score the flexibility performance of the supply air device based on the difference between the ideal value and the real value of the measurable variable.

16. A computer program product according to claim 15, **characterized in that**, said measurable variables comprise at least one of the following:

- the air flow through the supply air device

- pressure loss over the supply air device
- noise level of the supply air device
- air flow throw length of the supply air device.

**17.** A computer program product according to any of the claims 11 to 16, **characterized in that**, said rating properties further include adjustability AD of the supply air device and said computer program further comprises

- code means configured to calculate adjustability AD by equations

$$AD= AF_{ADstep} /AF_{total}* 100\%,$$

in which

$AF_{total}$ = total air flow capacity of the supply air device
$AF_{ADstep}$ = air flow change of a single adjusting step of the supply air

and

$$AF_{total} = k \sqrt{\Delta P_m} \qquad ,$$

in which

k = calibrated air flow ratio
$\Delta P_m$ = pressure difference of over the supply air device

and
- code means configured to score the adjustability performance of the supply air device based on the calculated adjustability AD.

**18.** A computer program product according to any of the claims 11 to 17, **characterized in that** said rating properties further include versatility of the supply air device and said computer program further comprises

- code means configured to evaluate, calculate or read the number of possible different throw patterns of the supply air device and
- code means configured to score the versatility performance of the supply air device based on the number of possible different throw patterns.

**Patentansprüche**

**1.** Verfahren zum Auswählen eines Zuluftgeräts für ein Belüftungssystem eines Raums aus einer Gruppe von Zuluftgeräten, wobei der Raum ein messbares Volumen hat, wobei das Verfahren die folgenden Schritte umfasst:

- Definieren der Gesamtluftströmungsrate des Raums,
- Definieren des akzeptablen Geräuschpegels des Raums,
- Auswählen einer ersten Untergruppe möglicher Zuluftgeräte auf Grundlage der Luftstromkapazitäten der Zuluftgeräte und des akzeptablen Geräuschpegels des Raums,
- Bestimmen der Anzahl der im Raum benötigten Zuluftgeräte und
- Berechnen des Auslegungsluftstroms für das Zuluftgerät bei Verwendung einer bestimmten Anzahl von Zuluftgeräten,

**dadurch gekennzeichnet, dass** das Verfahren ferner die folgenden Schritte umfasst:

- Definieren von mindestens zwei zusätzlichen Bewertungseigenschaften für die Zuluftgeräte,
- Bewerten der Leistung jedes Zuluftgeräts der ersten Untergruppe gemäß jeder Bewertungseigenschaft und Benoten der Leistung,

- Berechnen des kombinierten Bewertungswerts für jedes Zuluftgerät der ersten Untergruppe durch Summieren der Leistungswerte der einzelnen Bewertungseigenschaften,
- Einstufen der Zuluftgeräte der ersten Untergruppe auf Grundlage des kombinierten Bewertungswerts und
- Auswählen des Zuluftgeräts für den Raum auf Grundlage dieser Einstufung.

2. Verfahren nach Anspruch 1, **dadurch gekennzeichnet, dass** die Bewertungseigenschaften mindestens das Teilungsverhältnis DIR umfassen und das Verfahren ferner die folgenden Schritte umfasst:

- Definieren eines akzeptablen Teilungsverhältnisbereichs für das Zuluftgerät,
- Berechnen der Ausbreitungsfläche $A_S$ des Zuluftgeräts unter Verwendung des berechneten Auslegungsluftstroms,
- Berechnen des tatsächlichen Teilungsverhältnisses DIR für jedes Zuluftgerät in der ersten Untergruppe durch die Gleichung

$$DIR = A_S/A_R,$$

wobei

$A_S$ = Ausbreitungsfläche des Zuluftgeräts
$A_R$ = Bodenfläche des von einem Zuluftgerät versorgten Raums

- Vergleichen des realen Teilungsverhältnisses DIR und des akzeptablen Teilungsverhältnisses und
- Bewerten der Teilungsverhältnisleistung des Zuluftgeräts basierend auf dem Vergleich zwischen dem realen Teilungsverhältnis DIR und dem akzeptablen Teilungsverhältnisbereich.

3. Verfahren nach Anspruch 2, **dadurch gekennzeichnet, dass** beim Berechnen der Ausbreitungsfläche $A_S$ der Zulufteinrichtung eine abgesenkte Temperatur für den Zuluftstrom verwendet wird, die 2 bis 5 Grad, vorzugsweise drei Grad niedriger ist als die Temperatur der Luft im Raum.

4. Verfahren nach einem der Ansprüche 1 bis 3, **dadurch gekennzeichnet, dass** die Bewertungseigenschaften ferner die Zuluftstromtemperatur in der Aufenthaltszone des Raums umfassen und das Verfahren ferner die folgenden Schritte umfasst:

- Definieren der Lufttemperatur des Raums,
- Berechnen der Temperatur des Zuluftstroms in der Aufenthaltszone,
- Berechnen der Differenz zwischen der berechneten Zuluftstromtemperatur in der Aufenthaltszone und der Lufttemperatur des Raums und
- Bewerten der Zuluftstromtemperaturleistung des Zuluftgeräts basierend auf der Differenz zwischen der berechneten Zuluftstromtemperatur in der Aufenthaltszone und der Lufttemperatur des Raums.

5. Verfahren nach einem der Ansprüche 1 bis 4, **dadurch gekennzeichnet, dass** die Bewertungseigenschaften ferner die Flexibilität des Zuluftgeräts umfassen, und das Verfahren ferner die folgenden Schritte umfasst:

- Definieren von mindestens einer messbaren Variable in Bezug auf den Luftstrom durch das Zuluftgerät,
- Bestimmen eines Idealwerts für die messbare Variable,
- Bestimmen des realen Werts der messbaren Variable unter Verwendung des berechneten Auslegungsluftstroms,
- Vergleichen des bestimmten realen Werts und des Idealwerts und
- Bewerten der Flexibilitätsleistung des Zuluftgeräts basierend auf der Differenz zwischen dem Idealwert und dem realen Wert der messbaren Variable.

6. Verfahren nach Anspruch 5, **dadurch gekennzeichnet, dass** die messbaren Variablen mindestens eine der folgenden umfassen:

- den Luftstrom durch das Zuluftgerät
- den Druckverlust über dem Zuluftgerät
- den Geräuschpegel des Zuluftgeräts

- die Wurfweite des Luftstroms des Zuluftgeräts.

7. Verfahren nach einem der Ansprüche 1 bis 6, **dadurch gekennzeichnet, dass** die Bewertungseigenschaften ferner die Einstellbarkeit AD des Zuluftgeräts umfassen und das Verfahren ferner die folgenden Schritte umfasst:

- Berechnen der Einstellbarkeit AD durch folgende Gleichung

$$AD = AF_{ADstep}/AF_{total} * 100\ \%,$$

wobei

$AF_{total}$ = Gesamtluftstromkapazität des Zuluftgeräts
$AF_{ADstep}$ = Luftstromänderung eines einzelnen Einstellschritts des Zuluftgeräts

- Bewertung der Einstellbarkeitsleistung des Zuluftgeräts basierend auf der berechneten Einstellbarkeit AD.

8. Verfahren nach Anspruch 7, **dadurch gekennzeichnet, dass** die Gesamtluftstromkapazität des Zuluftgeräts durch die folgende Gleichung berechnet wird:

$$AF_{total} = k\ \sqrt{\Delta P_m},$$

wobei

k = kalibriertes Luftstromverhältnis
$\Delta P_m$ = Druckdifferenz über dem Zuluftgerät

9. Verfahren nach einem der Ansprüche 1 bis 8, **dadurch gekennzeichnet, dass** die Bewertungseigenschaften ferner die Vielseitigkeit des Zuluftgeräts umfassen und das Verfahren ferner die folgenden Schritte umfasst:

- Auswerten, Berechnen oder Lesen der Anzahl möglicher unterschiedlicher Wurfmuster des Zuluftgeräts und
- Bewerten der Vielseitigkeitsleistung des Zuluftgeräts basierend auf der Anzahl möglicher unterschiedlicher Wurfmuster.

10. Verfahren nach einem der Ansprüche 1 bis 9, **dadurch gekennzeichnet, dass** das Verfahren ferner die folgenden Schritte umfasst:

- Versehen des ausgewählten Zuluftgeräts mit Etiketten, die Daten umfassen, die die Installationsposition des Zuluftgeräts innerhalb des Raums identifizieren,
- Versehen des ausgewählten Zuluftgeräts mit Installationsanweisungen und/oder
- Voreinstellen des ausgewählten Zuluftgeräts.

11. Computerprogrammprodukt zum Auswählen von Zuluftgeräten für ein Belüftungssystem eines Raums aus einer Gruppe von Zuluftgeräten, wobei der Raum ein messbares Volumen hat, wobei das Computerprogrammprodukt Folgendes umfasst:

- Codemittel, die so konfiguriert sind, dass sie die Gesamtluftströmungsrate des Raums definieren,
- Codemittel, die so konfiguriert sind, dass sie den akzeptablen Geräuschpegel des Raums definieren,
- Codemittel, die so konfiguriert sind, dass sie eine erste Untergruppe möglicher Zuluftgeräte basierend auf den Luftströmungskapazitäten der Zuluftgeräte und dem akzeptablen Geräuschpegel des Raums auswählen,
- Codemittel, die so konfiguriert sind, dass sie die Anzahl der in dem Raum benötigten Zuluftgeräte bestimmen, und
- Codemittel, die so konfiguriert sind, dass sie den Auslegungsluftstrom für das Zuluftgerät berechnen, wenn eine bestimmte Anzahl von Zuluftgeräten verwendet wird, wenn das Computerprogramm in einem Prozessor eines Computers ausgeführt wird,

**dadurch gekennzeichnet, dass** das Computerprogramm ferner Folgendes umfasst:

- Codemittel, die so konfiguriert sind, dass sie mindestens zwei zusätzliche Bewertungseigenschaften für die Zuluftgeräte definieren,
- Codemittel, die so konfiguriert sind, dass sie die Leistung jedes Zuluftgeräts der ersten Untergruppe gemäß jeder Bewertungseigenschaft bewerten und die Leistung benoten,
- Codemittel, die so konfiguriert sind, dass sie den kombinierten Bewertungswert für jedes Zuluftgerät der ersten Untergruppe berechnen, indem sie die Leistungsbewertungen der einzelnen Bewertungseigenschaften summieren,
- Codemittel, die so konfiguriert sind, dass sie die Zuluftgeräte der ersten Untergruppe auf der Grundlage des kombinierten Bewertungswerts einstufen, und
- Codemittel, die so konfiguriert sind, dass sie das Zuluftgerät für den Raum auf der Grundlage dieser Einstufung auswählen.

12. Computerprogrammprodukt nach Anspruch 11, **dadurch gekennzeichnet, dass** die Bewertungseigenschaften mindestens das Teilungsverhältnis DIR umfassen und das Computerprogramm ferner Folgendes umfasst:

- Codemittel, die so konfiguriert sind, dass sie einen akzeptablen Teilungsverhältnisbereich für das Zuluftgerät definieren,
- Codemittel, die so konfiguriert sind, dass sie die Ausbreitungsfläche $A_S$; des Zuluftgeräts unter Verwendung des berechneten Auslegungsluftstroms berechnen,
- Codemittel, die so konfiguriert sind, dass sie das tatsächliche Teilungsverhältnis DIR für jedes Zuluftgerät in der ersten Untergruppe mit der Gleichung berechnen:

$$DIR = A_S/A_R,$$

wobei

$A_S$ = Ausbreitungsfläche des Zuluftgeräts
$A_R$ = Bodenfläche des von einem Zuluftgerät versorgten Raums

- Codemittel, die so konfiguriert sind, dass sie das tatsächliche Teilungsverhältnis DIR und das akzeptable Teilungsverhältnis vergleichen, und
- Codemittel, die so konfiguriert sind, dass sie die Teilungsverhältnisleistung des Zuluftgeräts basierend auf dem Vergleich zwischen dem tatsächlichen Teilungsverhältnis DIR und dem akzeptablen Teilungsverhältnisbereich bewerten.

13. Computerprogrammprodukt nach Anspruch 12, **dadurch gekennzeichnet, dass** es ferner Folgendes umfasst:

- Codemittel, die so konfiguriert sind, dass sie bei dem Berechnen der Ausbreitungsfläche $A_S$ des Zuluftgeräts eine abgesenkte Temperatur für den Zuluftstrom verwenden, die 2 bis 4 Grad, vorzugsweise drei Grad niedriger ist als die Temperatur der Luft im Raum.

14. Computerprogrammprodukt nach einem der Ansprüche 11 bis 13, **dadurch gekennzeichnet, dass** die Bewertungseigenschaften ferner die Zulufttemperatur in der belegten Zone des Raums umfassen und das Computerprogramm ferner Folgendes umfasst:

- Codemittel, die zum Lesen der Lufttemperatur des Raums konfiguriert sind,
- Codemittel, die zum Berechnen der Temperatur des Zuluftstroms in der belegten Zone konfiguriert sind,
- Codemittel, die so konfiguriert sind, dass sie die Differenz zwischen der berechneten Zuluftstromtemperatur in der belegten Zone und der Lufttemperatur des Raums berechnen, und
- Codemittel, die so konfiguriert sind, dass sie die Zuluftstromtemperaturleistung des Zuluftgeräts anhand der Differenz zwischen der berechneten Zuluftstromtemperatur in der belegten Zone und der Lufttemperatur des Raums bewerten.

15. Computerprogrammprodukt nach einem der Ansprüche 11 bis 14, **dadurch gekennzeichnet, dass** die Bewertungseigenschaften ferner die Flexibilität des Zuluftgeräts umfassen und das Computerprogramm ferner Folgendes umfasst:

- Codemittel, die so konfiguriert sind, dass sie mindestens eine messbare Variable in Bezug auf den Luftstrom durch das Zuluftgerät definieren,
- Codemittel, die so konfiguriert sind, dass sie einen Idealwert für die genannte Messgröße bestimmen,
- Codemittel, die so konfiguriert sind, dass sie einen Realwert der genannten Messgröße unter Verwendung des berechneten Auslegungsluftstroms bestimmen,
- Codemittel, die so konfiguriert sind, dass sie den bestimmten Realwert mit dem Idealwert vergleichen, und
- Codemittel, die so konfiguriert sind, dass sie die Flexibilitätsleistung des Zuluftgeräts basierend auf der Differenz zwischen dem Idealwert und dem Realwert der Messgröße bewerten.

16. Computerprogrammprodukt nach Anspruch 15, **dadurch gekennzeichnet, dass** die messbaren Variablen mindestens eine der folgenden umfassen:

   - den Luftstrom durch das Zuluftgerät
   - den Druckverlust über dem Zuluftgerät
   - den Geräuschpegel des Zuluftgeräts
   - die Wurfweite des Luftstroms des Zuluftgeräts.

17. Computerprogrammprodukt nach einem der Ansprüche 11 bis 16, **dadurch gekennzeichnet, dass** die Bewertungseigenschaften ferner die Einstellbarkeit AD des Zuluftgeräts umfassen und das Computerprogramm ferner Folgendes umfasst:

   - Codemittel, die so konfiguriert sind, dass sie die Einstellbarkeit AD anhand der folgenden Gleichungen berechnen

$$AD = AF_{ADstep}/AF_{total} * 100\ \%,$$

   wobei

   $AF_{total}$ = Gesamtluftstromkapazität des Zuluftgeräts
   $AF_{ADstep}$ = Luftstromänderung eines einzelnen Einstellschritts der Zuluft

   und

$$AF_{total} = k\ \sqrt{\Delta P_m},$$

   wobei

   $k$ = kalibriertes Luftstromverhältnis
   $\Delta P_m$ = Druckunterschied über dem Zuluftgerät

   und
   - Codemittel, die so konfiguriert sind, dass sie die Einstellbarkeitsleistung des Zuluftgeräts basierend auf der berechneten Einstellbarkeit AD bewerten.

18. Computerprogrammprodukt nach einem der Ansprüche 11 bis 17, **dadurch gekennzeichnet, dass** die Bewertungseigenschaften ferner die Vielseitigkeit des Zuluftgeräts umfassen und das Computerprogramm ferner Folgendes umfasst:

   - Codemittel, die so konfiguriert sind, dass sie die Anzahl der möglichen unterschiedlichen Wurfmuster des Zuluftgeräts auswerten, berechnen oder lesen, und
   - Codemittel, die so konfiguriert sind, dass sie die Vielseitigkeitsleistung des Zuluftgeräts basierend auf der Anzahl der möglichen unterschiedlichen Wurfmuster bewerten.

**Revendications**

1.  Procédé pour sélectionner un dispositif d'alimentation en air pour un système de ventilation d'un espace à partir d'un groupe de dispositifs d'alimentation en air, lequel espace présente un volume mesurable, ledit procédé comprenant les étapes consistant à

    - définir le débit d'air total de l'espace,
    - définir le niveau de bruit acceptable de l'espace,
    - sélectionner un premier sous-groupe de dispositifs d'alimentation en air possibles en fonction des capacités de débit d'air des dispositifs d'alimentation en air et du niveau de bruit acceptable de l'espace,
    - déterminer le nombre de dispositifs d'alimentation en air nécessaires dans l'espace et
    - calculer le débit d'air de conception pour le dispositif d'alimentation en air, lors de l'utilisation d'un nombre déterminé de dispositifs d'alimentation en air,

    **caractérisé en ce que** le procédé comprend également les étapes consistant à

    - définir au moins deux propriétés nominales supplémentaires pour les dispositifs d'alimentation en air,
    - évaluer les performances de chaque dispositif d'alimentation en air du premier sous-groupe selon chaque propriété nominale et évaluer les performances,
    - calculer la valeur nominale combinée pour chaque dispositif d'alimentation en air du premier sous-groupe en additionnant les scores de performance des propriétés nominales individuelles,
    - classer les dispositifs d'alimentation en air du premier sous-groupe en fonction de la valeur nominale combinée et
    - sélectionner le dispositif d'alimentation en air de l'espace en fonction dudit classement.

2.  Procédé selon la revendication 1, **caractérisé en ce que** lesdites propriétés nominales incluent au moins le rapport de division DIR et le procédé comprend également les étapes consistant à

    - définir une plage de rapport de division acceptable pour le dispositif d'alimentation en air,
    - calculer la surface de diffusion $A_S$ du dispositif d'alimentation en air à l'aide du débit d'air de conception calculé,
    - calculer le rapport de division DIR réel pour chaque dispositif d'alimentation en air du premier sous-groupe par l'équation

    $$DIR = A_S/A_R,$$

    dans lequel

    $A_S$ = zone de diffusion du dispositif d'alimentation en air
    $A_R$ = surface au sol de l'espace desservi par un dispositif d'alimentation en air

    - comparer le rapport de division DIR réel et le rapport de division acceptable et
    - évaluer les performances du rapport de division du dispositif d'alimentation en air en fonction de la comparaison entre le rapport de division DIR réel et la plage de rapport de division acceptable.

3.  Procédé selon la revendication 2, **caractérisé en ce que**, lors du calcul de la surface de diffusion $A_S$ du dispositif d'alimentation en air, une température abaissée pour le débit d'air d'alimentation est utilisée, laquelle température abaissée est de 2 à 5 degrés, de préférence de trois degrés inférieure à la température de l'air dans l'espace.

4.  Procédé selon l'une quelconque des revendications 1 à 3, **caractérisé en ce que** lesdites propriétés nominales incluent également la température du débit d'air d'alimentation au niveau de la zone occupée de l'espace et le procédé comprend également les étapes consistant à

    - définir la température de l'air de l'espace,
    - calculer la température du débit d'air d'alimentation au niveau de la zone occupée
    - calculer la différence entre la température calculée du débit d'air d'alimentation au niveau de la zone occupée et la température de l'air de l'espace et
    - évaluer les performances de la température du débit d'air d'alimentation du dispositif d'alimentation en air en fonction de la différence entre la température du débit d'air d'alimentation calculée au niveau de la zone occupée et la température de l'air de l'espace.

**5.** Procédé selon l'une quelconque des revendications 1 à 4, **caractérisé en ce que** lesdites propriétés nominales incluent également la flexibilité du dispositif d'alimentation en air, et le procédé comprend également les étapes consistant à

- définir au moins une variable mesurable relative au débit d'air à travers le dispositif d'alimentation en air,
- déterminer une valeur idéale pour ladite variable mesurable,
- déterminer la valeur réelle de ladite variable mesurable à l'aide du débit d'air de conception calculé,
- comparer la valeur réelle déterminée et la valeur idéale et
- évaluer la performance de flexibilité du dispositif d'alimentation en air en fonction de la différence entre la valeur idéale et la valeur réelle de la variable mesurable.

**6.** Procédé selon la revendication 5, **caractérisé en ce que** lesdites variables mesurables comprennent au moins l'un des éléments suivants :

- le débit d'air à travers le dispositif d'alimentation en air
- la perte de pression sur le dispositif d'alimentation en air
- le niveau de bruit du dispositif d'alimentation en air
- la longueur de projection du débit d'air du dispositif d'alimentation en air.

**7.** Procédé selon l'une quelconque des revendications 1 à 6, **caractérisé en ce que** lesdites propriétés nominales incluent également la capacité de réglage AD du dispositif d'alimentation en air et le procédé comprend également les étapes consistant à

- calculer la capacité de réglage AD par équation

$$AD = AF_{ADstep} \; / \; AF_{total} \; * \; 100 \; \%,$$

dans lequel

$AF_{total}$ = capacité totale de débit d'air du dispositif d'alimentation en air
$AF_{ADstep}$ = variation du débit d'air d'un seul niveau de réglage du dispositif d'alimentation en air

- évaluer les performances de capacité de réglage du dispositif d'alimentation en air en fonction de la capacité de réglage AD calculée.

**8.** Procédé selon la revendication 7, **caractérisé en ce que** ladite capacité totale de débit d'air du dispositif d'alimentation en air est calculée par l'équation

$$AF_{total} = k \; \sqrt{\Delta Pm},$$

dans lequel

k = rapport de débit d'air calibré
$\Delta P_m$ = différence de pression sur le dispositif d'alimentation en air

**9.** Procédé selon l'une quelconque des revendications 1 à 8, **caractérisé en ce que** lesdites propriétés nominales incluent également la polyvalence du dispositif d'alimentation en air et le procédé comprend également les étapes consistant à

- évaluer, calculer ou lire le nombre de modèles de projection différents possibles du dispositif d'alimentation en air et
- évaluer les performances de polyvalence du dispositif d'alimentation en air en fonction du nombre de modèles de projection différents possibles.

**10.** Procédé selon l'une quelconque des revendications 1 à 9, **caractérisé en ce que** le procédé comprend également les étapes consistant à

- fournir au dispositif d'alimentation en air sélectionné des étiquettes comprenant des données identifiant la position d'installation du dispositif d'alimentation en air à l'intérieur de l'espace,
- fournir au dispositif d'alimentation en air sélectionné les instructions d'installation et/ou
- prérégler le dispositif d'alimentation en air sélectionné.

**11.** Produit de programme informatique pour sélectionner des dispositifs d'alimentation en air pour un système de ventilation d'un espace à partir d'un groupe de dispositifs d'alimentation en air, lequel espace présente un volume mesurable, ledit produit de programme informatique comprenant

- un moyen de code configuré pour définir le débit d'air total de l'espace,
- un moyen de code configuré pour définir le niveau de bruit acceptable de l'espace,
- un moyen de code configuré pour sélectionner un premier sous-groupe de dispositifs d'alimentation en air possibles en fonction des capacités de débit d'air des dispositifs d'alimentation en air et du niveau de bruit acceptable de l'espace,
- un moyen de code configuré pour déterminer le nombre de dispositifs d'alimentation en air nécessaires dans l'espace et
- un moyen de code configuré pour calculer le débit d'air de conception pour le dispositif d'alimentation en air, lors de l'utilisation d'un nombre déterminé de dispositifs d'alimentation en air, lorsque ledit programme informatique est exécuté dans un processeur d'un ordinateur,

**caractérisé en ce que** ledit programme informatique comprend également

- un moyen de code configuré pour définir au moins deux propriétés nominales supplémentaires pour les dispositifs d'alimentation en air,
- un moyen de code configuré pour évaluer les performances de chaque dispositif d'alimentation en air du premier sous-groupe en fonction de chaque propriété nominale et évaluer les performances,
- un moyen de code configuré pour calculer la valeur nominale combinée pour chaque dispositif d'alimentation en air du premier sous-groupe en additionnant les scores de performance des propriétés nominales individuelles,
- un moyen de code configuré pour classer les dispositifs d'alimentation en air du premier sous-groupe en fonction de la valeur nominale combinée et
- un moyen de code configuré pour sélectionner le dispositif d'alimentation en air de l'espace en fonction dudit classement.

**12.** Produit de programme informatique selon la revendication 11, **caractérisé en ce que** lesdites propriétés nominales incluent au moins le rapport de division DIR et ledit programme informatique comprend également

- un moyen de code configuré pour définir une plage de rapport de division acceptable pour le dispositif d'alimentation en air,
- un moyen de code configuré pour calculer la zone de diffusion $A_S$ du dispositif d'alimentation en air à l'aide du débit d'air de conception calculé,
- un moyen de code configuré pour calculer le rapport de division réel DIR pour chaque dispositif d'alimentation en air dans le premier sous-groupe par l'équation

$$DIR = A_S/A_R,$$

dans lequel

$A_S$ = zone de diffusion du dispositif d'alimentation en air
$A_R$ = surface au sol de l'espace desservi par un dispositif d'alimentation en air

- un moyen de code configuré pour comparer le rapport de division DIR réel et le rapport de division acceptable et
- un moyen de code configuré pour évaluer les performances du rapport de division du dispositif d'alimentation en air en fonction de la comparaison entre le rapport de division DIR réel et la plage de rapport de division acceptable.

**13.** Produit de programme informatique selon la revendication 12, **caractérisé en ce qu'**il comprend également

- un moyen de code configuré pour utiliser une température abaissée pour le débit d'air d'alimentation, laquelle température abaissée est de 2 à 4 degrés, de préférence trois degrés inférieure à la température de l'air dans l'espace, lors du calcul de la zone de diffusion $A_S$ du dispositif d'alimentation en air.

**14.** Produit de programme informatique selon l'une quelconque des revendications 11 à 13, **caractérisé en ce que** lesdites propriétés nominales incluent également la température du débit d'air d'alimentation au niveau de la zone occupée de l'espace et ledit programme informatique comprend également

- un moyen de code configuré pour lire la température de l'air de l'espace,
- un moyen de code configuré pour calculer la température du débit d'air d'alimentation au niveau de la zone occupée,
- un moyen de code configuré pour calculer la différence entre la température du débit d'air d'alimentation calculée au niveau de la zone occupée et la température de l'air de l'espace et
- un moyen de code configuré pour évaluer les performances de température du débit d'air d'alimentation du dispositif d'alimentation en air en fonction de la différence entre la température du débit d'air d'alimentation calculée au niveau de la zone occupée et la température de l'air de l'espace.

**15.** Produit de programme informatique selon l'une quelconque des revendications 11 à 14, **caractérisé en ce que** lesdites propriétés nominales incluent également la flexibilité du dispositif d'alimentation en air, et ledit programme informatique comprend également

- un moyen de code configuré pour définir au moins une variable mesurable relative au débit d'air à travers le dispositif d'alimentation en air,
- un moyen de code configuré pour déterminer une valeur idéale pour ladite variable mesurable,
- un moyen de code configuré pour déterminer une valeur réelle de ladite variable mesurable en utilisant un débit d'air de conception calculé,
- un moyen de code configuré pour comparer la valeur réelle déterminée et la valeur idéale et
- un moyen de code configuré pour évaluer la performance de flexibilité du dispositif d'alimentation en air en fonction de la différence entre la valeur idéale et la valeur réelle de la variable mesurable.

**16.** Produit de programme informatique selon la revendication 15, **caractérisé en ce que** lesdites variables mesurables comprennent au moins l'un des éléments suivants :

- le débit d'air à travers le dispositif d'alimentation en air
- la perte de pression sur le dispositif d'alimentation en air
- le niveau de bruit du dispositif d'alimentation en air
- la longueur de projection du débit d'air du dispositif d'alimentation en air.

**17.** Produit de programme informatique selon l'une quelconque des revendications 11 à 16, **caractérisé en ce que** lesdites propriétés nominales incluent également la capacité de réglage AD du dispositif d'alimentation en air et ledit programme informatique comprend également

- un moyen de code configuré pour calculer la capacité de réglage AD par des équations

$$AD = AF_{ADstep}/AF_{total} * 100 \%,$$

dans lequel

$AF_{total}$ = capacité totale de débit d'air du dispositif d'alimentation en air
$AF_{ADstep}$ = variation du débit d'air d'une seule étape de réglage de l'air d'alimentation et

$$AF_{total} = k \sqrt{\Delta P_m},$$

dans lequel

k = rapport de débit d'air calibré

$\Delta P_m$ = différence de pression sur le dispositif d'alimentation en air et

- un moyen de code configuré pour évaluer les performances de capacité de réglage du dispositif d'alimentation en air en fonction de la capacité de réglage AD calculée.

**18.** Produit de programme informatique selon l'une quelconque des revendications 11 à 17, **caractérisé en ce que** lesdites propriétés nominales incluent également la polyvalence du dispositif d'alimentation en air et ledit programme informatique comprend également

- un moyen de code configuré pour évaluer, calculer ou lire le nombre de modèles de projection différents possibles du dispositif d'alimentation en air et
- un moyen de code configuré pour évaluer les performances de polyvalence du dispositif d'alimentation en air en fonction du nombre de modèles de projection différents possibles.

```
┌─────────────────────────────────────────────────────┐
│        defining total air flow rate of the space      │
└─────────────────────────────────────────────────────┘
                          ↓
┌─────────────────────────────────────────────────────┐
│       defining acceptable noise level of the space    │
└─────────────────────────────────────────────────────┘
                          ↓
┌─────────────────────────────────────────────────────┐
│    selecting a first subgroup of possible supply air devices │
└─────────────────────────────────────────────────────┘
                          ↓
┌─────────────────────────────────────────────────────┐
│       determining the number of supply air devices    │
└─────────────────────────────────────────────────────┘
                          ↓
┌─────────────────────────────────────────────────────┐
│     calculating design air flow for the supply air device │
└─────────────────────────────────────────────────────┘
                          ↓
┌─────────────────────────────────────────────────────┐
│      defining at least one additional rating property │
│      for the supply air devices                       │
└─────────────────────────────────────────────────────┘
                          ↓
┌─────────────────────────────────────────────────────┐
│   evaluating the performance of each supply air device │
│   according to each rating property                   │
└─────────────────────────────────────────────────────┘
                          ↓
┌─────────────────────────────────────────────────────┐
│              scoring the performance                  │
└─────────────────────────────────────────────────────┘
                          ↓
┌─────────────────────────────────────────────────────┐
│          calculating combined rating value            │
│          for each supply air device                   │
└─────────────────────────────────────────────────────┘
                          ↓
┌─────────────────────────────────────────────────────┐
│           ranking the supply air devices              │
└─────────────────────────────────────────────────────┘
                          ↓
┌─────────────────────────────────────────────────────┐
│        selecting supply air device to the space       │
└─────────────────────────────────────────────────────┘
```

Fig. 1

# EP 4 012 284 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20140121842 A1

**Non-patent literature cited in the description**

- **ESA SANDBERG.** Ilmastointilaitoksen mitoitus: Ilmastointitekniikka: osa 2. 2014